# EUROPEAN PATENT APPLICATION

(11) **EP 3 846 322 A1**
(43) Date of publication of application: **07.07.2021**
(21) Application number: 21150281.0
(22) Date of filing: 05.01.2021
(51) Int. Cl.: H02K 9/19, B05B 5/00

(54) **MOTOR WITH A COOLING STRUCTURE**

(30) Priority: 06.01.2020 KR 20200001377
(71) Applicant: LG Electronics, Inc., Yeongdeungpo-gu Seoul 07336 (KR)
(72) Inventor: CHOI, Inho, 08592 Seoul (KR); LEE, Jooseong, 08592 Seoul (KR); KIM, Kyunghwan, 08592 Seoul (KR)
(74) Representative: Ter Meer Steinmeister & Partner

(57) **Abstract**

A motor includes: a motor housing; a shaft disposed inside the motor housing and extending along a rotation axis; a rotor having magnetism, and coupled to an outer circumferential surface of the shaft; a stator accommodated in the motor housing, disposed to be spaced apart from an outside of the rotor in a radial direction of the shaft, and wound around with a coil; a nozzle for charging a cooling fluid by applying a voltage, and spraying the cooling fluid to at least one of the rotor and the stator; and a charging plate disposed to be spaced apart from a spray hole of the nozzle, and changes a spray form of the cooling fluid by applying a voltage.

## Description

### BACKGROUND OF THE INVENTION

### 1. Field of the invention

The present disclosure relates to a motor having a cooling structure, and more particularly, to a motor having a cooling structure for cooling by spraying a cooling fluid.

### 2. Description of the Related Art

A typical motor includes a rotor, a stator core wrapped around the rotor, and a coil wound around the rotor or stator core.

Among them, when a motor in which a coil is wound around the stator core is described as an example, the motor sends a current through the coil so as to apply a driving force to the rotor. When a current flows through the coil, an electromagnetic field is generated, and a magnet in the rotor receives force in a certain direction by the electromagnetic field, so that the rotor rotates.

At this time, when a current flows through the stator coil, heat is generated in the stator core or the stator coil. Therefore, methods for cooling the generated heat of the motor have been developed.

Korean patent application No. 10-2006-0126340 is suggested as a related art. In the related art, a lubricating oil exists inside the housing, and a part of the rotor is arranged to be immersed in the lubricating oil. A plurality of spatulas are arranged in one end of the rotor, and the spatula is configured to cool the motor by pumping lubricating oil.

However, in the related art, since the rotor rotates only in one direction, the cooling efficiencies of the side where the spatula rises from the lubricating oil and the side where the spatula goes toward the lubricating oil are different. Therefore, there is a problem that uniform cooling cannot be performed.

In addition, there is a problem in that the cooling efficiency is varied dramatically depending on the posture of a vehicle. That is, when the vehicle is inclined, the flow rate of the oil pumped by the spatula varies depending on the level of the lubricating oil. Therefore, there is also a problem of not being able to ensure uniform cooling efficiency.

In addition, in the related art, a part of the rotor and a spatula must be immersed in the lubricating oil. Thus, flow resistance occurs and additional rotational force must be supplied. Therefore, there is a problem that mechanical energy loss occurs.

### SUMMARY OF THE INVENTION

The present disclosure has been made in view of the above problems, and provides a motor having improved cooling efficiency than the related art.

The present disclosure further provides a motor that uniformly cools each portion of a motor.

The object is solved by the features of the independent claims. Preferred embodiments are given in the dependent claims

In accordance with an aspect of the present disclosure, a motor includes: a motor housing; a shaft disposed inside the motor housing and extending along a rotation axis; a rotor having magnetism, and coupled to an outer circumferential surface of the shaft; a stator accommodated in the motor housing, disposed to be spaced apart from an outside of the rotor in a radial direction of the shaft, and wound around with a coil; a nozzle for charging a cooling fluid by applying a voltage, and spraying the cooling fluid to at least one of the rotor and the stator; and a charging plate disposed to be spaced apart from a spray hole of the nozzle, and changes a spray form of the cooling fluid by applying a voltage.

The charging plate may be disposed to interest with an extending direction of the nozzle.

The charging plate includes a charging plate through hole formed in one side of the charging plate, and the nozzle is disposed to overlap at least a portion of the charging plate through hole, so that the sprayed cooling fluid can pass through the charging plate through hole.

The charging plate may be disposed between the spray hole of the nozzle and the stator.

The charging plate includes a first charging plate having a polarity opposite to that of the nozzle; and a second charging plate spaced apart from the first charging plate, disposed further from the nozzle than the first charging plate, and having a polarity opposite to that of the first charging plate.

A plurality of nozzles are provided, and one charging plate may include a plurality of charging plate through holes respectively formed so that at least a part of the charging plate through hole overlaps with the nozzle.

An insulation plate may be disposed in an inner surface of the charging plate.

A plurality of nozzles may be disposed along a longitudinal direction of the shaft, and the nozzle sprays the cooling fluid toward the stator and a coil exposed to both ends of the stator.

A plurality of nozzles may be disposed along a circumferential direction of the shaft, and the nozzle sprays the cooling fluid toward the stator

The nozzle is disposed in at least one of the front cover and the rear cover, and sprays the cooling fluid in a longitudinal direction of the shaft.

A plurality of charging plates are provided, and the plurality of charging plates are disposed to be movable to change a shape of the through hole.

### BRIEF DESCRIPTION OF THE DRAWINGS

The above and other objects, features and advantages of the present disclosure will be more apparent from the following detailed description in conjunction with the accompanying drawings, in which:

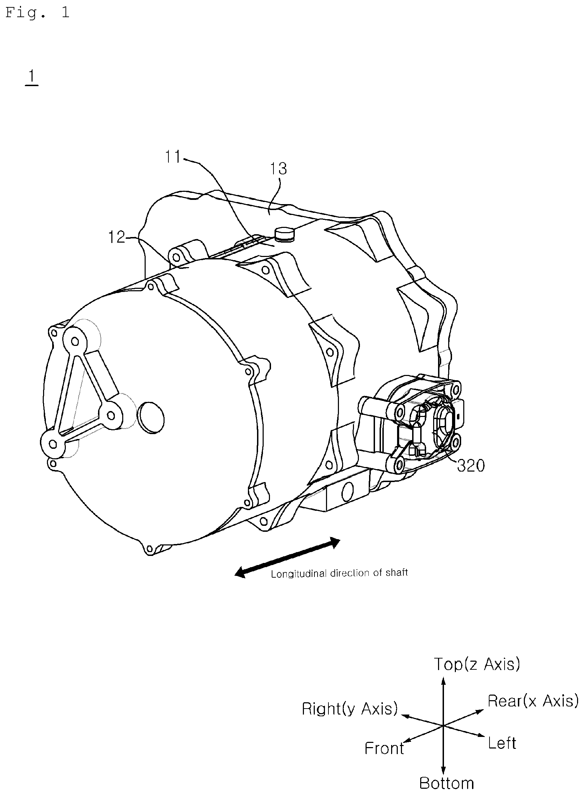

FIG. 1 is a perspective view of a general motor;

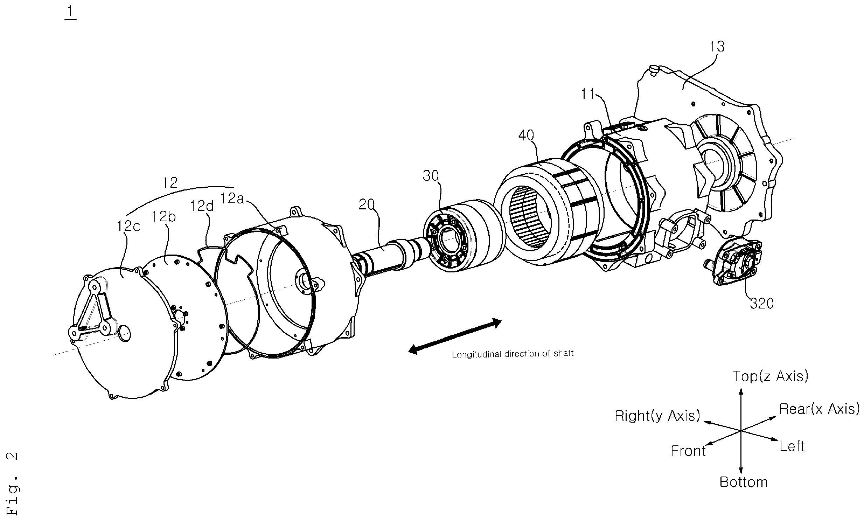

FIG. 2 is an exploded perspective view showing the main components of the motor of FIG. 1;
FIG. 3 is an interior view of a motor according to a first embodiment of the present disclosure as viewed from the left side;
FIG. 4 is an enlarged view showing an arbitrary one nozzle in FIG. 3;
FIG. 5 is a simplified usage view of a nozzle and a charging plate;
FIG. 6 is an internal cross-sectional view of a motor according to a second embodiment as viewed from the front;
FIG. 7 is an internal cross-sectional view of a motor according to a third embodiment as viewed from a left side;
FIG. 8 is an enlarged view showing an arbitrary one nozzle of a motor according to a fourth embodiment;
FIG. 9 is a view showing a spray angle of a nozzle according to an applied voltage; and
FIG. 10 is a view showing cooling efficiency according to various spray modes in a nozzle.

### DETAILED DESCRIPTION OF THE PREFERRED EMBODIMENTS

Advantages and features of the present disclosure and methods for achieving them will be made clear from the embodiments described below in detail with reference to the accompanying drawings. The present disclosure may, however, be embodied in many different forms and should not be construed as being limited to the embodiments set forth herein. Rather, these embodiments are provided so that this disclosure will be thorough and complete, and will fully convey the scope of the invention to those skilled in the art. The present disclosure is defined only by the scope of the claims. Like reference numerals refer to like elements throughout the specification.

Hereinafter, the present disclosure will be described with reference to the drawings for describing a motor 1 according to embodiments of the present disclosure.

Top, Bottom, Left, Right, Front, and Rear directions may be defined as shown in the drawing.

The rear is defined as x-axis, the right is as y-axis, and the top is as z-axis.

The longitudinal direction of a shaft may coincide with the front, rear, or x-axis.

The motor 1 according to the present disclosure is an apparatus that rotates a shaft 20 by receiving electricity, and drives a vehicle or the like due to the rotational force of the shaft 20. The vehicle may include a car or a motorcycle. The vehicle may include all of an internal combustion engine vehicle having an engine as a power source, a hybrid vehicle having an engine and an electric motor as a power source, an electric vehicle having an electric motor as a power source, and the like.

The generator is an apparatus that generates electricity by the rotational force of the shaft 20. The generator conceptually reverses the cycle of the motor. Therefore, hereinafter, the description will be made based on the motor, and the description of the generator will be omitted, but a person skilled in the art will sufficiently apply the description of the present disclosure to a generator.

A housing may form an outer shape of the motor.

A motor housing 11 may form an inner space in which the shaft 20 and a rotor 30 are accommodated. In the inner space of the motor housing 11, the shaft 20, the rotor 30, a stator 40, and a cooling fluid may be accommodated.

The motor housing 11 may be coupled with a pair of cover members covering both open sides to form an inner space.

The inner shape of the motor housing 11 may be an inner peripheral surface of a cylinder.

The outer shape of the motor housing 11 may be a shape of a polygonal column or other shape other than a cylindrical shape.

The motor may include a front cover 12 covering one open side of the motor housing 11. The motor may include a rear cover 13 covering the other open side of the motor housing 11 from the opposite side of the front cover 12.

In the present disclosure, the front cover 12 may be an inverter housing.

The inverter housing may be provided in a hollow cylindrical shape. In the rear side of the inverter housing, a rear hole through which the shaft 20 passes may be formed.

A portion of the rear wall of the inverter housing may protrude forward and be coupled to an inverter heat exchange plate. Inside the inverter housing, a step is formed in the rear wall to guide a position where the inverter heat exchange plate is coupled.

The inverter housing may include an inverter heat exchange unit through which water introduced into the inverter housing flows. The inverter housing may include an inverter heat exchange unit for cooling the inverter therein. The inverter heat exchange unit may be formed by coupling the inverter housing and the inverter heat exchange plate.

The inverter heat exchange plate may be provided with an O-ring coupling groove for coupling an inverter housing O-ring. The inverter housing O-ring may be interposed and coupled between the inverter housing and the inverter heat exchange plate.

The inverter housing cover may be coupled to the open front of the inverter housing. The inverter housing cover may have a disk shape having an outer diameter corresponding to the outer peripheral surface of the inverter housing.

The motor housing 11 may have a cooling flow path 100 through which a cooling fluid flows. More specifically, the cooling flow path 100 through which a cooling fluid flows is formed inside a wall forming the motor housing 11.

An oil inlet 120 for supplying a cooling fluid to the cooling flow path 100 may be formed in one side of the motor housing 11. The cooling fluid cooled by an oil heat exchanger 330 is supplied to the oil inlet 120.

A plurality of nozzles 110 may be formed in the inner circumferential surface of the motor housing 11. The nozzle 110 sprays the cooling fluid supplied to the cooling flow path 100.

A flow path through which the cooling fluid flows may be formed in the front cover 12. A flow path through which the cooling fluid flows may be formed in the rear cover 13. The flow paths through which the cooling fluid flows in the motor housing 11, the front cover 12, and the rear cover 13 may be connected to each other. The cooling fluid flows through the flow path and may absorb heat from the motor housing 11, the front cover 12, and the rear cover 13.

A plurality of nozzles 110 may be formed in at least one of the front cover 12 or the rear cover 13. The nozzle 110 sprays the cooling fluid supplied to the cooling flow path 100.

The shaft 20 is a component disposed in the rotating shaft and rotating around the rotating shaft. The shaft 20 may have one end coupled to a bearing and rotatably supported by one side wall of the motor housing 11. The other end of the shaft 20 may be coupled to a bearing and rotatably supported by the other side wall of the motor housing 11.

The front end of the shaft 20 may be coupled to the front cover 12. The rear end of the shaft 20 may be coupled to the rear cover 13.

The shaft 20 may be provided in a shape having a plurality of steps.

The shaft 20 rotates when the motor is operated, and heat may be generated by friction.

The radial direction of the shaft 20 may be defined as a direction toward the outer diameter from the center of the shaft 20. The longitudinal direction of the shaft 20 may be defined as an extending direction of the shaft 20, i.e., the direction of the rotation axis. A circumferential direction may be defined as a tangential direction of the outer peripheral surface or the inner peripheral surface of the motor housing 11.

The rotor 30 is a rotator that rotates about a rotation axis. The rotor 30 may be disposed inside the housing and may be disposed inside the stator 40.

The rotor 30 may rotate the shaft 20 as a rotation axis.

The rotor 30 may include a rotor core and a magnet accommodated in the rotor core. The rotor core may be coupled to the shaft 20.

The rotor 30 may be coupled to surround the outer circumference surface of the shaft 20.

The temperature of the rotor 30 may be increased by heat generated inside the rotor 30 while the motor is operated or heat received from the shaft 20.

The rotor 30 may be cooled by a cooling fluid.

The stator 40 is a stationary core disposed to be spaced apart from the outer perimeter of the rotor 30. The stator 40 may be disposed inside the housing and may be disposed outside the rotor 30.

The stator 40 may include a stator core and a coil 41 wound around a slot provided in the stator core.

The stator 40 may be disposed outside the rotor 30 based on the radial direction of the shaft 20.

The stator 40 may be disposed to surround the outer circumference surface of the rotor 30.

The stator 40 may be coupled to the inside of the motor housing 11.

When the motor is operated, the temperature of the stator 40 may increase due to heat received from the coil 41 or heat energy generated by itself.

The stator 40 may be cooled directly or indirectly by a cooling fluid.

The cooling fluid may be in direct contact with the stator 40 to cool the stator 40 or indirectly absorb conductive heat by a heat conductor to cool the stator 40.

The stator 40 may be configured by combining a plurality of stator cores.

The stator 40 has a contact surface with the motor housing 11 and may exchange thermal energy with the motor housing 11 through heat conduction.

The coil 41 may be wound around the stator core. The coil 41 may be disposed inside the stator 40.

The coil 41 may be provided to protrude to both sides of the stator 40.

The coil 41 may provide a driving force to the rotor 30 by forming a magnet provided in the rotor 30 and a magnetic field.

In the coil 41, when the motor is operated, current flows into the coil 41, and the temperature of the coil 41 may increase. The coil 41 may transfer the generated thermal energy to the stator 40.

Although not shown, in another embodiment, the coil 41 may be wound around the rotor 30.

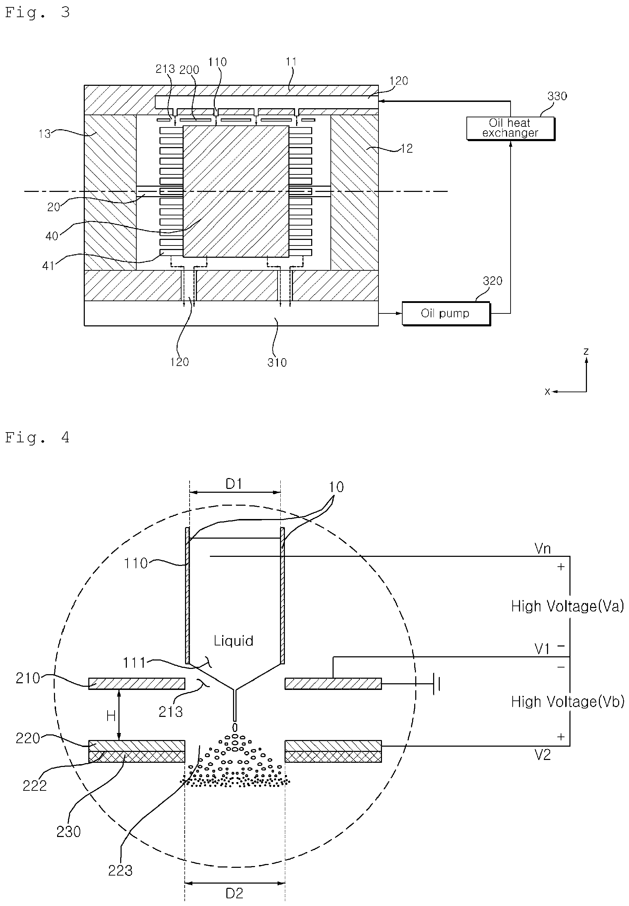

The cooling structure of the motor will be described with reference to FIG. 3.

The motor may cool each component by spraying a cooling fluid to the stator 40, the rotor 30, or the shaft 20 inside the housing.

In the housing of the motor, a cooling flow path 100 through which the cooling fluid flows is formed, and a nozzle 110 through which the cooling fluid of the cooling flow path 100 is sprayed is formed, so that the cooling fluid is sprayed into the housing from the nozzle 110. The nozzle 110 may be disposed in the upper surface of the motor housing 11 to spray the cooling fluid downward, and may be disposed in the side surface of the motor housing 11 to spray the cooling fluid laterally.

A voltage may be applied to the nozzle 110, and the cooling fluid may be charged by applying a voltage before being sprayed.

A charging plate 200 is disposed to be spaced apart from a nozzle spray hole 111. The charging plate 200 may be disposed apart from the nozzle spray hole 111 toward the direction in which the cooling fluid is sprayed. A voltage is applied to the charging plate 200. When a voltage is applied to the charging plate 200, the cooling fluid may be sprayed by forming fine particles by static electricity, and the spray angle may vary.

According to the present disclosure, a voltage is applied between the nozzle spray hole 111 and the charging plate 200 to atomize the sprayed cooling fluid by using electrostatic force. In a method of spraying due to electrostatic force, the conductivity of the liquid is used to make the liquid to be charged, and the liquid is sprayed by an electric field formed by a potential difference.

An oil outlet 130 through which the sprayed cooling fluid is discharged may be formed in the housing 11 of the motor. The sprayed cooling fluid is discharged from the oil outlet 130 and may be collected in an oil sump 310.

The nozzle 110 is a device that sprays a cooling fluid flowing through the cooling flow path 100 into the motor housing 11.

The nozzle 110 may be formed by extending from the motor housing 11 to the inside. Alternatively, the nozzle 110 may be formed by extending from the front cover 12 to the inside, or may be formed by extending from the rear cover 13 to the inside. Alternatively, the nozzle 110 may be formed as a separate pipe, and at least a portion of the nozzle 110 may be inserted into the motor housing 11 and disposed.

The nozzle 110 may have various spraying methods including a jet mode in which a small diameter spray hole 111 sprays with a high pressure, a dripping mode in which a large amount of fluid is poured from the nozzle spray hole 111, an impinging mode of colliding with a strong pressure at the nozzle spray hole 111, and the like. The form and spraying method of the oil spray hole 111 include a range to the extent that a person skilled in the art can easily change.

The nozzle 110 may be provided with a spray hole 111 having one side that is connected to the cooling flow path 100 through which the cooling fluid flows, and the other side through which the cooling fluid is sprayed.

The spray hole 111 is an opening through which the cooling fluid is sprayed. The diameter of the spray hole may be formed to have the same size as the diameter Dn of the nozzle. The diameter Dn of the nozzle may be formed constant. The diameter of the nozzle Dn may be formed between 1mm ∼ 3mm.

The nozzle 110 may be composed of a conductor. A voltage may be applied to the nozzle 110 composed of a conductor. When a voltage is applied to the nozzle 110, the cooling fluid before spraying is charged. The cooling fluid may be charged with a positive polarity.

The extending direction of the nozzle 110 may be an extension line of the center of a cylinder when the nozzle 110 has a cylindrical shape. Assuming that the cooling fluid is sprayed in a straight line, the spray direction of the cooling fluid may mean the direction in which the cooling fluid is sprayed, and may coincide with the extending direction of the nozzle 110.

The charging plate 200 is applied with a voltage and interacts with the charged cooling fluid to change the spraying form of the cooling fluid.

The charging plate 200 is disposed to intersect with the extending direction of the nozzle 110. For example, when the nozzle 110 extends inward along the radial direction of the shaft 20, the charging plate 200 may be disposed to extend in a radial direction. The extending directions of the charging plate 200 and the nozzle 110 may be orthogonal.

The charging plate 200 may be disposed to be spaced apart from the inner circumferential surface of the housing. The charging plate 200 may be disposed parallel to the inner circumferential surface of the housing.

The charging plate 200 may be disposed to be spaced apart from the outer circumferential surface of the stator 40. The charging plate 200 may be disposed parallel to the outer circumferential surface of the stator 40.

The charging plate 200 may be disposed between the housing and the stator 40.

The charging plate 200 may include a charging plate through hole formed by penetrating through one side of the charging plate 200. The nozzle 110 may be disposed to overlap with at least a part of the charging plate through hole.

When the nozzle 110 is sprayed from the top to the bottom, the charging plate through hole may be disposed to vertically overlap with the nozzle 110. When the nozzle 110 sprays from the side surface, the charging plate through hole may be disposed to horizontally overlap with the nozzle 110.

The diameter Dn of the nozzle may not be larger than the charging plate through hole, but the nozzle 110 may be disposed to overlap with the charging plate through hole. That is, at least a part of the charging plate through hole may be disposed to overlap with the nozzle 110, and the rest may not overlap with the nozzle 110.

The center of the cross section of the nozzle spray hole 111 and the center of the charging plate through hole may be vertically overlapped. The center of a circle forming the cross section of the nozzle spray hole 111 and the center of a circle forming the charging plate through hole may overlap each other.

The charging plate 200 may be disposed between the nozzle spray hole 111 and the stator 40. When the nozzle 110 sprays the cooling fluid downward, the charging plate 200 may be disposed below the nozzle spray hole 111, but may be disposed above the stator 40. When the nozzle 110 sprays the cooling fluid to the side, the charging plate 200 may be disposed in the left or right side of the nozzle spray hole 111, and may be disposed in the right or left side of the stator 40.

The charging plate 200 may be formed of two of a first charging plate 210 and a second charging plate 220. The first charging plate 210 and the second charging plate 220 are spaced apart from each other.

When the charging plate 200 is disposed between the nozzle spray hole 111 and the stator 40, the first charging plate 210 may be disposed close to the nozzle spray hole 111, and the second charging plate 220 may be disposed close to the stator 40. The first charging plate 210 is disposed farther from the stator 40 than the second charging plate 220, and the second charging plate 200 is disposed farther from the nozzle 110 than the first charging plate 210.

The first charging plate 210 and the second charging plate 220 may be applied with a voltage to be charged. The first charging plate 210 may have a different polarity from that of the nozzle 110. The first charging plate 210 may have a different polarity from that of the second charging plate 220. Therefore, the polarity of the nozzle 110 and the polarity of the second charging plate 220 may be the same.

The first charging plate 210 may be charged with a polarity opposite to that of the nozzle 110. If the nozzle 110 is charged with a positive polarity, the first charging plate 210 may be charged with a negative polarity.

The second charging plate 220 may be charged with a polarity opposite to that of the first charging plate 210. If the first charging plate 210 is charged with a negative polarity, the second charging plate 220 may be charged with a positive polarity.

Referring to FIG. 4, a voltage is applied between the nozzle 110 and the charging plate 200, so that the cooling fluid may be sprayed in the state of micro droplet from the nozzle spray hole 111. When a voltage is applied between the nozzle 110 and the charging plate 200, the cooling fluid has a cone shape in the spray hole 111, and the cooling fluid may be sprayed as micro droplet.

Assuming that the nozzle 110 is disposed in the vertical direction and sprays the cooling fluid downward, when the cooling fluid is suspended in the nozzle spray hole 111 located in the vertical direction, the gravity and the surface tension are balanced to form a hemispherical shape. At this time, when a voltage is applied to the nozzle 110, a force opposite to the surface tension is generated, and according to the force, the droplets of the cooling fluid formed at a spray end gradually increase. The end of the increased droplets of cooling fluid may have a cone shape. The form of the cone-shaped cooling fluid is called Taylor cone.

When the voltage Va is continuously applied to the Taylor cone-shaped cooling fluid to exceed a critical point, it is sprayed in the form of a jet from the tip of the cone. In this case, if the viscosity of the cooling fluid is high, it is sprayed in the form of continuous fibers, and if the viscosity of the cooling fluid is low, it is scattered like a spray.

When the charging plate 200 is divided into the first charging plate 210 and the second charging plate 220, a voltage of Va may be applied between the nozzle 110 and the first charging plate 210. Va may be a positive voltage. In this case, the cooling fluid may have a cone shape at the spray hole 111, and the cooling fluid may be sprayed as micro droplets.

A voltage of Vb may be applied between the first charging plate 210 and the second charging plate 220. Vb may be a positive voltage. The second charging plate 220 may adjust the spray angle.

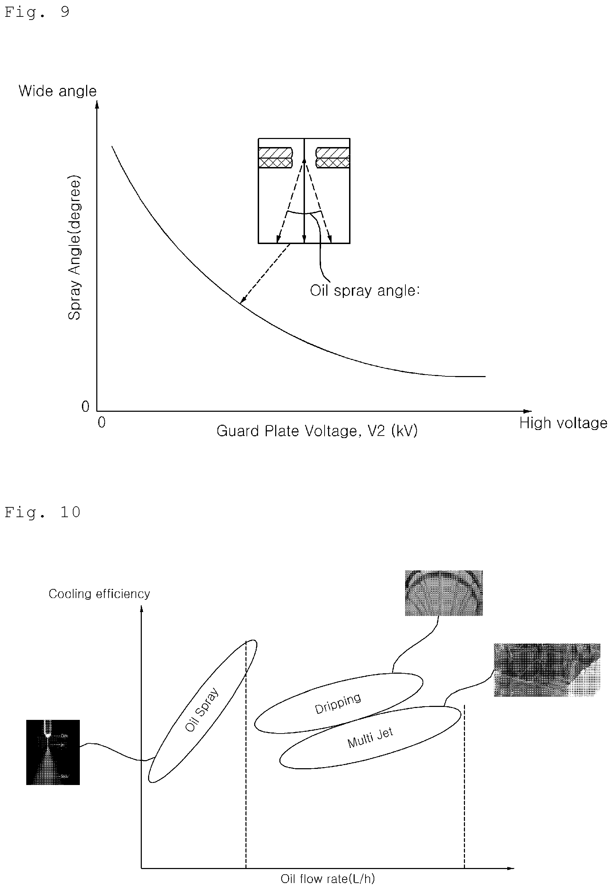

Referring to FIG. 9, when the voltage Vb applied between the first charging plate 210 and the second charging plate decreases, the electric field is weakened, so that the spray angle at which the cooling fluid is sprayed increases, and the cooling fluid spreads more widely to be sprayed. On the other hand, when the voltage Vb applied between the first charging plate 210 and the second charging plate increases, the electric field becomes strong, so that the spray angle at which the cooling fluid is sprayed decreases, and the cooling fluid is sprayed intensively on a local area. In this case, it has the effect of intensive cooling of the local area, and an impact effect is generated by spraying on the local area so that it can absorb heat more quickly.

The potential of the nozzle 110 is defined as Vn, the potential of the first charging plate 210 is defined as VI, and the potential of the second charging plate 220 is defined as V2. Further, the voltage Va is defined as the potential difference of the nozzle in comparison with the first charging plate 210, and defined as Va=Vn-V1. In addition, the voltage Vb is defined as the potential difference of the second charging plate 220 in comparison with the first charging plate 210, and defined as Vb=V2-V1.

Va may be smaller than Vb. Va may be a value within 1 to 9 kV, and Vb may be a value within 0 to 10 kV.

The voltage applied to the charging plate 200 or the nozzle 110 may be variable. The spray mode and the spray angle of the cooling fluid sprayed from the nozzle 110 may be determined by changing the voltage applied to the charging plate 200 or the nozzle 110. More specifically, the spray mode of oil may be determined by changing the voltage Va applied to the nozzle 110 and the first charging plate, and the spray angle of oil may be determined by changing the voltage Vb applied to the first charging plate and the second charging plate. However, the voltage Va applied to the nozzle 110 and the first charging plate and the voltage Vb applied to the first charging plate and the second charging plate do not operate separately, and may affect each other.

A first charging plate through hole 213 may be formed in the first charging plate 210, and a second charging plate through hole 223 may be formed in the second charging plate 220.

At least a part of the first charging plate through hole 213 and the second charging plate through hole 223 may be disposed to overlap.

Referring to FIG. 4, a diameter D1 of the first charging plate through hole and a diameter D2 of the second charging plate through hole may be the same. Although not shown, the diameter D1 of the first charging plate through hole may be smaller than the diameter D2 of the second charging plate through hole. At least a part of the second charging plate through hole 223 may overlap with the first charging plate through hole 213. The diameter D1 of the first charging plate through hole or the diameter D2 of the second charging plate through hole may be formed between 20mm ∼ 30mm.

The distance H between the first charging plate and the second charging plate may be smaller than the diameter D1 of the first charging plate through hole. The distance H between the first charging plate and the second charging plate may be smaller than the diameter D2 of the second charging plate through hole. The distance H between the first charging plate and the second charging plate may be about 1/2 of the diameter D2 of the second charging plate through hole. The distance H between the first charging plate and the second charging plate may be determined between 10 mm ∼ 15 mm.

Since the distance H between the first charging plate and the second charging plate is disposed sufficiently close to the diameter of the charging plate through hole, there is an effect that even if the cooling fluid is sprayed from the spray hole, it does not touch the charging plate and can be properly sprayed to the stator. In addition, there is an effect that the spray mode may be easily controlled by applying a sufficient electric field.

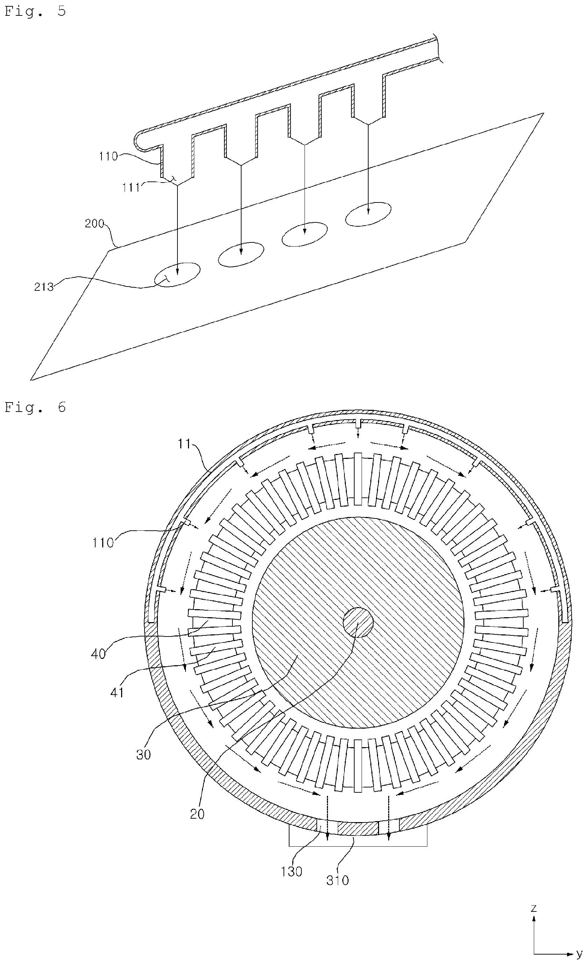

Referring to FIG. 5, a plurality of nozzles 110 may be disposed and one charging plate 200 may be disposed. The charging plate 200 has a plurality of charging plate through holes so that at least a portion of the charging plate 200 overlaps with the nozzle 110. In the charging plate through hole, a plurality of charging plate through holes may be formed so as to correspond to the plurality of nozzles 110, respectively. Each of the charging plate through holes may overlap with each of the nozzles 110. At least a part of each of the charging plate through holes may overlap with each of the nozzles 110.

The motor may include an insulation plate 230. The insulation plate 230 is a component that prevents electricity from conducting. The motor includes the insulation plate 230 to prevent a current from flowing between the charging plate 200 and the stator 40.

The charging plate 200 may have an outer surface close to the nozzle 110 and an inner surface close to the stator 40. In this case, the insulation plate 230 is disposed in the inner surface of the above mentioned two surfaces.

The charging plate 200 may include a first charging plate 210 close to the nozzle 110 and a second charging plate 220 far from the nozzle 110. In this case, the insulation plate 230 may be disposed in the inner surface 222 of the second charging plate.

The oil sump 310 is a component in which the cooling fluid sprayed into the housing is collected. The oil sump 310 may be disposed in the lower portion of the motor housing 11.

An oil outlet 130 may be formed in the lower portion of the motor housing 11. The oil outlet 130 may be formed through the lower portion of the motor housing 11, and the cooling fluid collected in the lower portion of the motor housing 11 may flow to the oil sump 310.

At least one oil outlet 130 may be disposed. The oil outlet 130 may be formed below both ends of the stator 40. The oil outlet 130 may be formed below the coil 41 protruded from both ends of the stator 40.

The cooling fluid collected in the oil sump 310 flows to the oil heat exchanger 330.

The motor housing 11 may have an oil pump 320 disposed in one side of the outer circumferential surface of the motor housing 11. The motor housing 11 may have an oil pump 320 disposed in the left or right side of the outer circumferential surface of the motor housing 11. The motor housing 11 may have an oil pump 320 disposed between the middle left and the lower left on the outer circumferential surface of the motor housing 11.

The oil pump 320 may be disposed in a pipe connecting the oil sump 310 and the oil heat exchanger 330.

The oil pump 320 provides a flow pressure to circulate the cooling fluid.

The motor housing 11 may be provided with a coupling portion coupled to the oil pump 320 on the outer circumferential surface. The motor housing 11 may be coupled by inserting a portion of the oil pump 320 into the coupling portion.

Although not shown, in another embodiment, a pair of oil pumps 320 may be coupled to both sides of the motor housing 11.

The oil heat exchanger 330 heat-exchanges the oil with the outside air. More specifically, the oil heat exchanger 330 discharges heat of oil to the outside.

The oil heat exchanger 330 may be disposed between the oil sump 310 and the oil inlet 120. The oil heat exchanger 330 receives a cooling fluid from the oil sump 310 and discharges the heat of the cooling fluid to the outside to achieve a cooling, and then may supply the cooling fluid into the motor housing 11 through the oil inlet 120.

### <First embodiment>

Hereinafter, a motor according to a first embodiment will be described with reference to FIG. 3. According to the first embodiment, the motor may include a plurality of nozzles 110, and may spray a cooling fluid in the radial direction of the shaft 20.

A plurality of nozzles 110 may be disposed along the longitudinal direction of the shaft 20.

The nozzles 110 disposed along the longitudinal direction of the shaft 20 may spray a cooling fluid toward the stator 40 and the coil 41 exposed to both ends of the stator 40.

The cooling flow path 100 may be disposed in the motor housing 11, and a cooling fluid may flow along the cooling flow path 100. More specifically, the cooling flow path 100 may be disposed in the upper end of the motor housing 11, and the nozzle 110 is formed to extend downward from the upper end of the motor housing 11 to spray the cooling fluid downward. The nozzles 110 may be disposed at uniform intervals.

The nozzle 110 sprays cooling fluid in the radial direction of the shaft 20. The cooling fluid contacts the upper end of the stator 40 or the upper end of the coil 41 exposed to both ends of the stator 40 along the longitudinal direction of the shaft 20. The cooling fluid sprayed to the upper end of the stator 40 flows along the outer circumferential surface of the stator 40 and may cool the front surface of the stator 40. The cooling fluid sprayed into the coil 41 exposed to both ends of the stator 40 flows between the wound coils 41 to cool a plurality of coils 41.

### <Second embodiment>

Hereinafter, a motor according to a second embodiment will be described with reference to FIG. 6. The motor according to the second embodiment may be used within a range that does not conflict with the first embodiment described above. The motor according to the second embodiment will be described focusing on differences from the first embodiment.

According to the second embodiment, the motor may include a plurality of nozzles 110 and may spray cooling fluid in the radial direction of the shaft 20.

A plurality of nozzles 110 may be disposed along the circumferential direction. The nozzle 110 may be disposed above the horizontal plane passing through the center of the stator 40. The nozzles 110 may be disposed at equal intervals.

The nozzle 110 disposed along the circumferential direction may spray the cooling fluid toward the top and side surfaces of the stator 40. The sprayed cooling fluid flows through the outer circumferential surface of the stator 40 due to gravity and flows downwards of the motor housing 11. When the spray angle of the cooling fluid is wide, the sprayed cooling fluid may flow to both ends of the stator 40.

The plurality of nozzles 110 may be disposed vertically with respect to the longitudinal direction of the shaft 20 along the circumferential direction. However, the present disclosure is not limited thereto, and features of the first and second embodiments may be simultaneously included. That is, the plurality of nozzles 110 may be disposed diagonally when viewed from above. In other words, the plurality of nozzles 110 may be disposed in a helical direction. Alternatively, the plurality of nozzles 110 may be arranged in an 'X' shape when viewed from above.

### <Third embodiment>

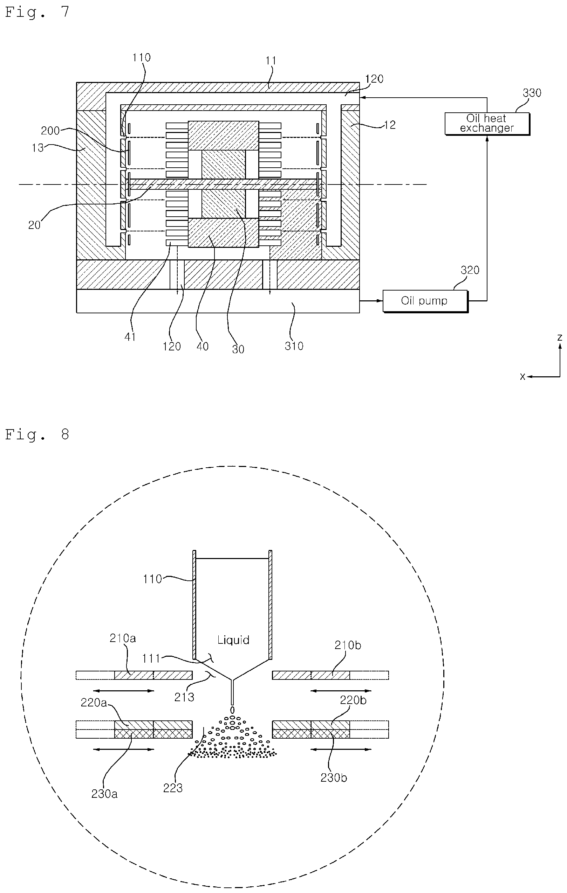

Hereinafter, a motor according to a third embodiment will be described with reference to FIG. 7. The motor according to the third embodiment may be used within a range that does not conflict with the first and second embodiments described above. Hereinafter, the motor according to the third embodiment will be described focusing on differences from the first and second embodiments.

According to the third embodiment, the nozzle 110 may be formed in the front cover 12 or the rear cover 13. The cooling flow path 100 may be formed in not only the motor housing 11 but also the front cover 12 or the rear cover 13. The charging plate 200 may be disposed parallel to the front cover 12 or the rear cover 13.

According to the third embodiment, the plurality of nozzles 110 formed in the front cover 12 or the rear cover 13 may spray the cooling fluid in the longitudinal direction of the shaft 20. That is, the nozzle 110 according to the third embodiment may spray the cooling fluid to the side.

According to the third embodiment, the cooling fluid sprayed from the nozzle spray hole 111 may be sprayed to not only the stator 40 but also the rotor 30 and the shaft 20. The cooling fluid sprayed from the nozzle 110 may contact a side surface of the rotor 30, an outer circumferential surface of the rotor 30, or an inner circumferential surface of the stator 40.

According to the third embodiment, unlike the first and second embodiments, the cooling fluid may be directly sprayed to the rotor 30, and may directly cool the rotor 30.

### <Fourth embodiment>

Hereinafter, a motor according to a fourth embodiment will be described with reference to FIG. 8. The motor according to the fourth embodiment may be used within a range that does not conflict with the first to third embodiments described above. The motor according to the fourth embodiment will be described focusing on differences from the first to third embodiments.

According to the fourth embodiment, a plurality of charging plates 200 may be formed. When viewed from the extending direction of the nozzle 110, the plurality of charging plates 200 may form a through hole of which at least a portion overlaps with the nozzle 110. The plurality of charging plates 200 may be disposed to be movable to change the shape of the through hole.

Referring to FIG. 8, the first charging plate 210 may include a first charging plate a 210a and a first charging plate b 210b. The first charging plate a 210a and the first charging plate b 210b may face each other to form a through hole that performs the same function as that of the charging plate through hole of the first to third embodiments. Similarly, the second charging plate may be composed of the second charging plate a 220a and the second charging plate b 220b, and the insulation plate 230 may be composed of an insulation plate a 230a and an insulation plate b 230b.

The first charging plate 210 may be disposed to be movable. More specifically, the first charging plate 210 is movable in a direction perpendicular to the extending direction of the nozzle. Similarly, the second charging plate 220 and the insulation plate 230 may be disposed to be movable in a direction perpendicular to the extending direction of the nozzle.

The first charging plate a 210a and the first charging plate b 210b may be individually controlled and may be moved individually. The first charging plate a 210a and the first charging plate b 210b may move to change the shape of the through hole. The first charging plate a 210a and the first charging plate b 210b may move to change the interval.

When the first charging plate a 210a and the first charging plate b 210b move, the spraying form of the cooling fluid may be variable. For example, when the first charging plate a 210a and the first charging plate the b 210b are close to each other, the electric field becomes stronger and the shape of the Tailor cone may be changed.

Similarly, when the second charging plate a 220a and the second charging plate b 220b move, the electric field formed by the second charging plate 220 changes, so that the spray angle of the nozzle 110 may be changed.

The first charging plate 210, the second charging plate 220, or the insulation plate 230 may be individually controlled through a controller.

The first to third embodiments change the spray mode by changing the voltage applied to the nozzle and the charging plate, but the fourth embodiment differs in that the spray mode is changed by changing the position of the charging plate under the same voltage.

Referring to FIG. 10, the effects according to the present disclosure may be seen.

The oil spray structure according to the present disclosure is a "oil spray" method in which a cooling fluid is sprayed as micro droplets, and has an effect of ensuring high cooling efficiency with a small flow rate. On the other hand, since the "Dripping" method requires pouring a lot of cooling fluid from the nozzle 110, there is a problem in that a much larger amount of cooling fluid must be sprayed so as to have the same cooling efficiency as in the present disclosure. In addition, the "Multi-Jet" method is a method of spraying a small amount of cooling fluid at high pressure from a plurality of nozzles 110. However, there is a problem in that a lot of cooling fluid must be supplied like the "Dripping" method, and even if a lot of cooling fluid is supplied, it cannot have high cooling efficiency as in the present disclosure.

Unlike other methods, the present disclosure has an effect of having a high cooling efficiency even at a small flow rate because it sprays in the state of micro droplet by using electrostatic force. This is because the surface area increases as the size of the droplet decreases, so that the heat transfer rate is dramatically reduced to absorb heat quickly.

According to the motor having the cooling structure of the present disclosure, one or more of the following effects are provided.

First, there is an advantage of improving cooling efficiency by rapidly absorbing heat from an inductor or the like, by spraying as micro droplets using electrostatic force.

Second, there is an advantage of uniformly performing cooling without being affected by gravity, by spraying cooling fluid as micro droplets.

Third, there is an advantage of achieving miniaturization by using an oil pump having a smaller capacity, as the flow rate of the used cooling fluid is small.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A motor comprising:
a motor housing;
a shaft disposed inside the motor housing and extending along a rotation axis;
a rotor having magnetism, and coupled to an outer circumferential surface of the shaft;
a stator accommodated in the motor housing, disposed to be spaced apart from an outside of the rotor in a radial direction of the shaft, and wound around with a coil;
a nozzle for charging a cooling fluid by applying a voltage, and spraying the cooling fluid to at least one of the rotor and the stator; and
a charging plate disposed to be spaced apart from a spray hole of the nozzle, and changes a spray form of the cooling fluid by applying a voltage.

2. The motor of claim 1, wherein the charging plate is disposed to interest with an extending direction of the nozzle.

3. The motor of claim 1 or 2, further comprising a charging plate through hole formed by penetrating through one side of the charging plate, preferably the nozzle is disposed to overlap at least a portion of the charging plate through hole.

4. The motor of claim 3, wherein a center of a circle forming a cross section of the spray hole of the nozzle and a center of a circle forming the charging plate through hole are overlapped with each other.

5. The motor of any one of the preceding claims, wherein the charging plate is disposed between the spray hole of the nozzle and the stator.

6. The motor of any one of the preceding claims, wherein the charging plate comprises:
a first charging plate having a polarity opposite to that of the nozzle; and
a second charging plate spaced apart from the first charging plate, disposed further from the nozzle than the first charging plate, and having a polarity opposite to that of the first charging plate.

7. The motor of claim 6, further comprising a first or second charging plate through hole formed by penetrating through one side of the first or second charging plate, preferably a distance between the first charging plate and the second charging plate is smaller than a diameter of the through hole of the first or second charging plate and/or at least a part of the second charging plate through hole overlaps the first charging plate through hole.

8. The motor of any one of the preceding claims, further comprising a plurality of nozzles, preferably the charging plate comprises a plurality of charging plate through holes respectively formed so that at least a part of the charging plate through hole overlaps with the nozzle.

9. The motor of any one of the preceding claims, further comprising an insulation plate disposed in an inner surface of the charging plate.

10. The motor of any one of the preceding claims, wherein a plurality of nozzles are disposed along a longitudinal direction of the shaft, and the nozzle sprays the cooling fluid toward the stator and a coil exposed to both ends of the stator.

11. The motor of any one of the preceding claims, wherein a plurality of nozzles are disposed along a circumferential direction of the shaft, and the nozzle sprays the cooling fluid toward the stator

12. The motor of any one of the preceding claims, further comprising:
a front cover covering one open side of the motor housing; and
a rear cover covering the other open side of the motor housing in an opposite side of the front cover.

13. The motor of claim 12, wherein the nozzle is disposed in at least one of the front cover and the rear cover, and sprays the cooling fluid in a longitudinal direction of the shaft.

14. The motor of any one of the preceding claims, wherein a plurality of charging plates are provided, and when viewed from an extending direction of the nozzle, the plurality of charging plates form a through hole so that at least a part of the through hole overlaps with a spray hole of the nozzle.

15. The motor of claim 14, wherein the plurality of charging plates are disposed to be movable to change a shape of the through hole.
